# EUROPEAN PATENT APPLICATION

(11) **EP 4 704 470 A1**
(43) Date of publication of application: **04.03.2026**
(21) Application number: 25197870.6
(22) Date of filing: 25.08.2025
(51) Int. Cl.: H04W 48/18, H04W 8/12

(54) **SELECTION OF A COMMUNICATION NETWORK**

(30) Priority: 26.08.2024 FI 20246055
(71) Applicant: Telia Company AB, 169 94 Solna (SE)
(72) Inventor: JALKANEN, Tero, 04300 Tuusula (FI); SARAJISTO, Tomi, 00790 Helsinki (FI)
(74) Representative: Berggren Oy

(57) **Abstract**

A method for selecting a communication network (140, 150, 160) for a roaming terminal device (110) is provided, the method comprises: receiving (210) a request for providing information on a number of communication networks (140, 150, 160); determining (220) at least one communication network (140, 150, 160) serving in a location the terminal device (110) is roaming, the determination of the at least one communication network (140, 150, 160) is based on at least one predefined criteria; generating (230) a response comprising data indicative of the at least one communication network (140, 150, 160) to the terminal device (110) over the signaling plane. Also a server device and a computer program are provided.

## Description

### TECHNICAL FIELD

The invention concerns in general the technical field of telecommunications. More particularly, the invention concerns a selection of a network for a terminal device.

### BACKGROUND

Implementing a seamless and optional network selection for a user is not straightforward addition. Currently it works somehow but put it simply just because there are so few networks available and users are accustomed to it. In the future this list provided for selection will also include a variety of smaller networks, like private networks, thus making the list longer and more complex to handle by the user.

Another example of a network selection situation is that a satellite network provider is reusing a frequency band of a mobile network operator for its own purposes and, thus, offering a possibility to select the satellite based network connection in use. In other words, it is desirable that the user may easily yet transparently to select the satellite based network when (s)he is residing in a remote location out of coverage of normal mobile networks, such as skiing in Lapland.

Therefore, there is a need to introduce further approaches for network selection for mobile communication.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a server device and a computer program for selecting a communication network for a terminal device.

The objects of the invention are reached by a method, a server device and a computer program as defined by the respective independent claims.

According to a first aspect, a method for selecting a communication network for a terminal device is provided, the method, performed by a server device residing in a home communication network of a subscription of the terminal device, comprises:
receiving, over a signaling plane, a request for providing information on a number of communication networks for the terminal device roaming outside a service area of the home communication network,
determining at least one communication network serving in a location the terminal device is roaming, the determination of the at least one communication network is based on at least one predefined criteria,
generating a response comprising data indicative of the at least one communication network to the terminal device over the signaling plane.

The at least one predefined criteria may define at least one of the following: a pricing of at least one communication network; an input received from other users in relation to at least one communication network; a preference defined by the user with respect to at least one a communication network; commercial aspects defined by a telecom operator with respect to at least one communication network; technical aspects defined by a telecom operator with respect to at least one communication network.

Further, the determination of the at least one communication network may be performed by inquiring information from data storage arranged to store information on the communication networks. For example, a position data of the terminal device may be used as a parameter in the inquiry. The position data of the terminal device may e.g. be received in the request.

Moreover, a determination of the at least one communication network may be based on a network management policy managed by the telecom operator of the home communication network, the network management policy comprising data defining networks having VoLTE/ VoNR capabilities.

Still further, the at least one predefined criteria may be a prediction of a future location of the terminal device, the prediction is performed by using artificial intelligence/machine learning procedures.

According to a second aspect, a server device is provided, the server device is configured to execute the steps of the method according to the first aspect as defined above.

According to a third aspect, a computer program is provided, the computer program comprising instructions to cause the server device according to the second aspect to execute the steps of the method according to the first aspect.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of a communication environment according to an example.
Figure 2 illustrates schematically a method according to an example.
Figure 3 illustrates schematically a flow chart disclosing communication between various entities according to an example.
Figure 4 illustrates schematically an apparatus according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

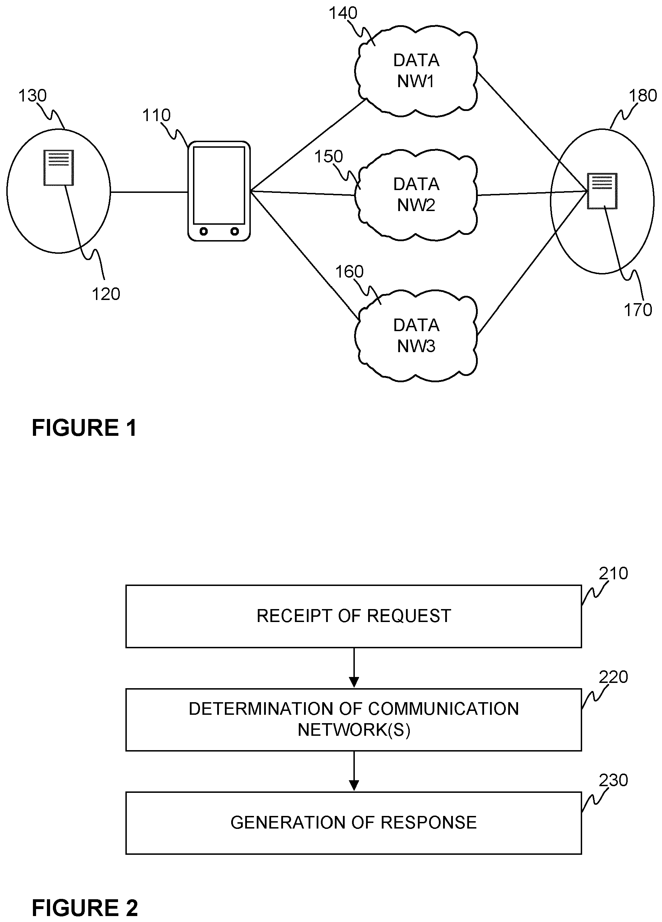

Figure 1 illustrates schematically an example of a communication environment into which the present invention is implantable to. In accordance with at least some embodiments of the invention a terminal device 110 is provided with an application software for a network selection and it is communicatively connected to a network selection server 120 over a signaling plane, i.e. the network selection server 120 residing in a home communication network 130 of a subscription of the terminal device 110 is accessible over a signaling plane. Thus, it may be considered that the network selection server 120 resides in a signaling network. For the purpose of describing at least some aspects of the invention it is hereby assumed that the terminal device 110 resides as a roaming subscriber in service areas of a number of communication networks 140, 150, 160. Figure 1 does not depict the access networks as such over which the terminal device 110 may access the respective networks 130, 140, 150, 160. Figure 1 also illustrates an application server 170 residing in Internet 180 wherein the application server 170 represents an entity providing a service the user of the terminal device 110 is willing to use when the network connection is arranged for the roaming subscriber.

As mentioned, the terminal device 110 executes an application software that is communicatively connected to the network selections server 120 and the application software is configured to output information on macro networks, cf. networks denoted with 140, 150, 160 in Figure 1 in the location where the user resides. The location of the user may e.g. be determined with any applicable positioning service, such as utilizing GPS signals and the information may be delivered to the network selection server 120. The network selection server 120 is arranged to access information disclosing the accessible communication networks 140, 150, 160 in various locations, and in the location the terminal device 110 currently resides as the roaming subscriber. The home telecom operator of the subscriber may also define a network management policy, such as it may be allowed for the user to add/delete/modify a list of available networks, e.g. based on his/her preferences on which type of network to use, and the list is administrated by the home telecom operator. As a non-limiting examples, it may be allowed to e.g. present only those visited networks 140, 150, 160 that have "preferred commercial roaming agreements" with the home operator. The home operator may also choose to show just the networks, such as temporary networks, which have VoLTE/VoNR (=Voice over New Radio) capabilities in the list of the network management policy, or any other corresponding technical features, in order to make sure the customer is always able to make and receive calls. In other words, the at one predefined criteria is set so that the desired communication networks are disclosed on the list as the data indicative of the at least one communication network.

As also mentioned, the application executed in the terminal device 110 is provided e.g. with an API connection to the backend network selection server 120 hosted by the home telecom operator and in the home mobile communication network that is configured to provide the network selection service at least by maintaining and providing service information on the available networks in the particular area. For example, the network selection algorithm may be configured to take into account pricing (cf. e.g. dynamic pricing) information with respect to the one or more communication networks as a one selection criteria as a basis for preferred network selection. Alternatively or in addition, the following aspects may also be applied in the network selection algorithm alone or in any combination with others: an input received from other users in relation to at least one communication network 140, 150, 160 (cf. an evaluation of service of respective networks); a preference defined by the user with respect to at least one communication network 140, 150, 160 (cf. e.g. technical requirements); commercial aspects defined by a telecom operator with respect to at least one communication network 140, 150, 160 (e.g. based on roaming agreements); technical aspects defined by a telecom operator with respect to at least one communication network 140, 150, 160 (e.g. technical capabilities of the networks). The network selection server 120 may e.g. be arranged to get the information about different "temporary networks", and information related to them, by reusing databases such as GSMA IR.21 (=Roaming Database) merged with telecom operator's own information about roaming partners. Optionally the mobile network operator may even offer API to the network selection server 120 so that that the external providers could themselves update their information. Various other parameters, such as crowd sourced analytics on how a particular network is performing e.g. based on data rates and coverage area, may be utilized by the network selection server 120 with respect to various networks 140, 150, 160.

For sake of completeness, it is worthwhile to mention that the application executed by the terminal device 110 may be configured by the home telecom operator to automatically take care of setting up connections to the necessary APN / DNN, such as IMS APN. Also slices as per device requirements (like "use S-NSSAI ABC and XYZ") may be controlled by the application across the different networks, whenever possible.

Next, at least some aspects of the network selection procedure itself is described. In other words, when it is time to perform the network selection, e.g. due to current network coverage runs out or user decides to search for a better network or for any other reason, such as in response to switching on the terminal device outside the coverage of the home network, the following steps may occur:
- The application executed by the terminal device 110 accesses the network selections server 120 over a signaling plane, and, thus, (eventually) over the signaling network of the home communication network.
- The network selection server 120 hosted by the home telecom operator provides the network selection service.
- "Signaling Network" in this context means that it is only used for the signaling traffic between the application executed by the terminal device 110 and the network selection server 120, while the data / user plane traffic towards e.g. application servers 170 located in Internet 180 is utilized via networks 140, 150, 160.
- Once the application in the terminal device 110 (provisioned by network selection service) has required info on available communication networks, cf "Data Networks", 140, 150, 160 in the area the terminal device 110 resides, it commands the data layer application of the terminal device 110 to contact one (or more) of them in order to have the actual data connection for the user. This may be arranged by reusing the regular 3GPP standardized network attachment procedures.

Hence, the invention occurs in a high-level as described above. For avoidance of doubt it is worthwhile to mention that the communication environment shown in Figure 1 presents a simplified logical 5G SA (Stand Alone) model for the invention, where the application executed by the terminal device 110 is using Signaling Network to reach the network selection server 120 containing the information about the communication networks, cf. Data Networks, 140, 150,160 available in the location of the terminal device 110. The selected network 140, 150,160 is then used for carrying the user plane traffic between terminal device 110 and application server 170 via one or more nodes, such as UPF (User Plane Function).

The network selection service may also be configured to use artificial intelligence / machine learning procedures to predict where the user is potentially heading and update the list of available communication networks 140, 150, 160 in that location in advance, to avoid situation where connection to signaling network, cf. the network denoted with 130 in Figure 1, is lost completely leaving the application of the terminal device 110 with no data about local networks 140, 150, 160. Hence, the prediction of the future location of the terminal device may be used as the at least one criteria.

Figure 2 illustrates schematically aspects relating to a method according to the invention. The method is for selecting a communication network 140, 150, 160 for a terminal device 110 and the method illustrated in Figure 1 is performed by a server device 120 residing in a home communication network 130 of a subscription of the terminal device 110. The home communication network shall be understood also to cover any other network into which the performance of the method is assigned by the home network operator.

In step 210, a request for providing information on a number of communication networks 140, 150, 160 for the terminal device 110 roaming outside a service area of the home communication network 130 is received by the network selection server 120 over a signaling plane. The request may be automatically generated by the application executed by the terminal device 110 or triggered by the user of the terminal device 110. For example, the automatic generation of the request may be configured to occur in response to a detection that the terminal device 110 is not in a coverage area of the home communication network 130. As a result, the terminal device 110 generates the request over a signaling plane and it is delivered over an access network available in the location of the terminal device 110 resides.

In response to the receipt 210 of the request the network selection server 120 is configured to determine 220 at least one communication network 140, 150, 160 serving in the location the terminal device 110 is roaming, the determination of the at least one communication network 140, 150, 160 is based on at least one predefined criteria. As described, the network selection server 120 may maintain, or be provided with an access to, data of a number of communication networks 140, 150, 160 in various areas, e.g. on a position based approach, and by utilizing various other parameters with respect to the networks 140, 150,160. Thus, the determination of the communication network 140, 150, 160 may be based on at least one of the parameters fulfilling the at least one predefined criteria, such as a price of the communication e.g. relating to data transfer. Finally, in response to the determination 220 of the communication network 140, 150, 160 the network selection server 120 is configured to generate a response comprising data indicative of the at least one communication network 140, 150, 160 to the terminal device 110 over the signaling plane. The receipt of information on the selected communication network 140, 150, 160 causes the terminal device 110 to perform predefined operations to connect to the respective network 140, 150, 160, such as the network selection application may be configured to generate internal control signal to radio entity, such as a radio modem of the terminal device 110 with any necessary information to cause an establishment of a connection to the respective network 140, 150, 160 and, thus, utilizing the services e.g. from the Internet 180.

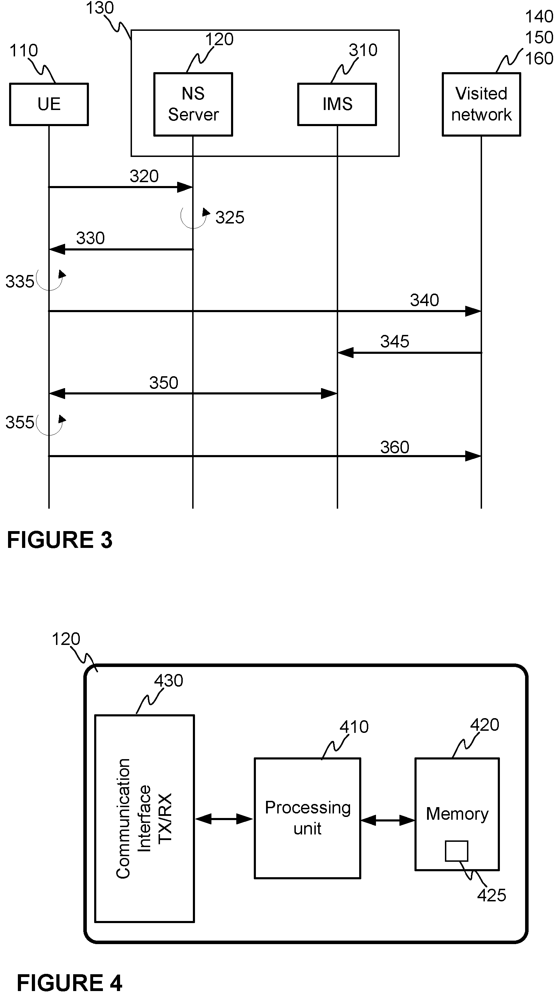

Figure 3 schematically illustrates as a flow chart the communication between various entities being involved at least in part in the process of selecting the communication network and also in an establishment of the connection. In addition to previously mentioned entities also an entity of the home network 130 responsible for a type of communication, i.e. the data connection, is shown, i.e. the IP Multimedia Sub-system (IMS) 310. However, it shall be understood that the entity is dependent on the type of communication and the network technology applied to. The signaling and/or messaging between the shown entities is numbered that in the following the signaling is described:
320: Customer of home network 130 e.g. arrives at the airport in a faraway destination and decides to call home. Being scared of high roaming charges, the user wants to attach to a local network 140, 150, 160. The application in the terminal device 110 sends a request to the network selection server 120 for the list of available local networks. This signaling between the terminal device 110 and the network selection server 120 selects the data roaming connection offered by the home network 130 as free of charge, for example, to perform the signaling between the entities.
325: The network selection server 120 determines, e.g. by inquiring information from a database e.g. by using position of the terminal device 110 as a parameter and applies predefined criteria for network selection and notices one communication network 140, 150, 160 to meet the one or more criteria, such as fulfilling criterion set for the price.
330: The network selection server 120 informs the terminal device 110, i.e. by communicating with the application executed in the terminal device 110, about determined communication network 140, 150, 160.
335: The terminal device outputs information on the the determined communication network, such as the name of the network, in the terminal device 110 (cf. displays the information on the display) and it may require confirmation from the user to use it. The application of the terminal device 110 may also inform the radio part of the terminal device 110 that the respective communication network 140, 150, 160 is selected.
340, 345: The terminal device 110 performs an attachment procedure, and as a result the terminal device 110 gets attached to the respective network 140, 150,1 60. Thus, a connection is established via Internet DNN to web browsing as well IMS DNN to home network's 130 IMS core system 310 reusing e.g. the VoNR home routed roaming connection between the communication network 140, 150, 160 and the home network 130.
350: The user makes the voice call as desired.

The procedure may further continue as follows:
355: Once the user leaves the location, the application may detect the coverage of applied network 140k, 150, 160 is being lost and it is informed to the user. This may also comprise a further step requesting the user whether she/he would like to connect to some other network 140, 150, 160. The user decides network connectivity is not needed right now and declines the offer.
360: The terminal device 110 performs a standard detach procedure for the communication network 140, 150, 160 applied for the call as described.

Figure 4 illustrates an example of an apparatus suitable to implement the function of the network selection server 120 is schematically illustrated in Figure 4. In other words, the apparatus may be configured to implement at least part of the method as described. The execution of the respective method, or at least some portions of it, may be achieved by arranging a processing unit 410 comprising at least one processor to execute at least some portion of computer program code 425 stored in at least one memory 420 causing the processor 410, and, thus, the apparatus to implement the method steps as described in order to execute the function as described. In other words, the processing unit 410 may be arranged to access the memory 420 and to retrieve and to store any information therefrom and thereto. Moreover, the processing unit 410 may be configured to control a communication through one or more communication interfaces 430 for accessing the other entities being involved in the operation, such as the other nodes/devices in a manner as described in the description herein. Hence, the communication interface 430 may be arranged to implement, possibly under control of the processing unit 410, a number of communication protocols, such as an IP or any other communication protocol, for communicating with one or more entities to receive input and to output data as described. The term communication interface 430 shall be understood in a broad manner comprising necessary hardware and software elements for implementing the communication techniques. Further, the apparatus in question may comprise one or more input/output devices for inputting and outputting information. In accordance with the present invention such input/output devices forming a user interface may at least comprise a touch screen, but may also comprise further entities, such as a physical keyboard, buttons, display, loudspeaker, microphone camera and so on. In some implementation of the apparatus at least some of the input/output devices may be external to the apparatus and coupled to it either wirelessly or in a wired manner. For sake of clarity, the processing unit 410 herein refers to any unit or a plurality of units suitable for processing information and control the operation of the apparatus in general at least in part, among other tasks. The mentioned operations may e.g. be implemented with a microcontroller solution with embedded software. Similarly, the invention is not limited to a certain type of memory 420, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the apparatus may be implemented with a distributed computing environment in which a plurality of computing devices is configured to cooperate to cause an execution of the method according to at least one of the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

As derivable from above, some aspects of the present invention may relate to a computer program product which, when executed by at least one processor, cause an apparatus to perform at least some portions of the method as described. For example, the computer program product may comprise at least one computer-readable non-transitory medium having the computer program code 425 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 425 may comprise a proprietary application, such as computer program code for generating the data record in the manner as described.

The computer program code 425 may also be considered to include the definitions and instructions of an execution of the application of the data record in a further use.

The specific examples provided in the description given above should not be construed as limiting the applicability and/or the interpretation of the appended claims. Lists and groups of examples provided in the description given above are not exhaustive unless otherwise explicitly stated.

## Claims

1. A method for selecting a communication network (140, 150, 160) for a terminal device (110), the method, performed by a server device (120) residing in a home communication network (130) of a subscription of the terminal device (110), comprises:
receiving (210), over a signaling plane, a request for providing information on a number of communication networks (140, 150, 160) for the terminal device (110) roaming outside a service area of the home communication network (130),
determining (220) at least one communication network (140, 150, 160) serving in a location the terminal device (110) is roaming, the determination of the at least one communication network (140, 150, 160) is based on at least one predefined criteria,
generating (230) a response comprising data indicative of the at least one communication network (140, 150, 160) to the terminal device (110) over the signaling plane.

2. The method according to claim 1, wherein the at least one predefined criteria defines at least one of the following: a pricing of at least one communication network (140, 150, 160); an input received from other users in relation to at least one communication network (140, 150, 160); a preference defined by the user with respect to at least one a communication network (140, 150, 160); commercial aspects defined by a telecom operator with respect to at least one communication network (140, 150, 160); technical aspects defined by a telecom operator with respect to at least one communication network (140, 150, 160).

3. The method according to any of preceding claims, wherein the determination (220) of the at least one communication network is performed by inquiring information from data storage arranged to store information on the communication networks.

4. The method according to claim 3, wherein a position data of the terminal device (110) is used as a parameter in the inquiry.

5. The method according to claim 4, wherein the position data of the terminal device (110) is received in the request.

6. The method according to claim 1, wherein a determination (220) of the at least one communication network (140, 150, 160) is based on a network management policy managed by the telecom operator of the home communication network (130), the network management policy comprising data defining networks having VoLTE/ VoNR capabilities.

7. The method according to claim 1, wherein the at least one predefined criteria is a prediction of a future location of the terminal device (110), the prediction is performed by using artificial intelligence/machine learning procedures.

8. A server device (120) configured to execute the steps of the method of any of the claims 1 to 5.

9. A computer program comprising instructions to cause the server device of claim 8 to execute the steps of the method of any of the claims 1 to 7.
